# EUROPEAN PATENT APPLICATION

(11) **EP 0 818 938 A2**
(43) Date of publication of application: **14.01.1998**
(21) Application number: 97110670.3
(22) Date of filing: 30.06.1997
(51) Int. Cl.: H04Q 7/38, H04Q 7/22

(54) **Mobile-assisted hand-off across multiple wireless data networks**

(30) Priority: 09.07.1996 US 677242
(71) Applicant: AT&T Corp., New York, NY 10013-2412 (US)
(72) Inventor: Durant, Gregory M., Plainfield, NJ 07063 (US); Hsu, Danny K., Morristown, NJ 07960 (US); Huang, Kenny Xiaojian, Somerset, NJ 08873 (US); Russell, Jesse Eugene, Piscataway, NJ 08854 (US); Schroeder, Robert Edward, Montville, NJ 07045 (US); Wallace, Edward L., South Orange, NJ 07079 (US)
(74) Representative: KUHNEN, WACKER & PARTNER

(57) **Abstract**

The present invention encompasses a method of inter-network hand-offs between a plurality of different wireless data networks. The method comprises the steps of: receiving RF measurements from a plurality of wireless data network base stations; comparing each of the received RF measurements to a predetermined minimum RF threshold; selecting one of the plurality of different wireless networks; requesting a wireless communications device through a wired connection with a plurality of network radio frequency modems to communicate with the selected wireless network; communicating the request through radio frequencies to an inter-network router connected to current wireless data network; generating a list of hand-off candidates for the wireless communications device; selecting a target base station hand-off candidate based upon a predetermined communications criteria; communicating the hand-off candidate to the wireless communications device; tuning to communications channel for facilitation of wireless communication with the hand-off candidate; and performing any necessary protocol conversion.

## Description

### Field of the Invention

This invention relates to the field of wireless communications, and more particularly to the field of mobile communications over multiple wireless data networks.

### Background of the Invention

A wireless communications device user has been limited by a single wireless data network the wireless communications device will support. When traveling outside of the radio frequency (RF) coverage for that wireless data network, the user typically has no viable alternative means of wireless communications. A wireless communications device is unable to communicate with a fixed communications device of a different network or another wireless communications device that is using a different wireless data network interface protocol. The moving wireless communication device is limited to communicating with other wireless communications devices that utilize the same wireless data network interface protocol. Therefore, the moving wireless communication device is essentially isolated from other wireless communication devices on different data networks.

Accordingly, there is a need for enabling moving wireless communication devices to communicate over multiple wireless data network protocols.

### Summary of the Invention

In accordance with the present invention, there is provided a method of inter-network hand-offs between a plurality of different wireless data networks. The method comprises the steps of: receiving RF measurements from a plurality of wireless data network base stations; comparing each of the received RF measurements to a predetermined minimum RF threshold; selecting one of the plurality of different wireless networks; requesting a wireless communications device through a wired connection with a plurality of network radio frequency modems to communicate with the selected wireless network; communicating the request through radio frequencies to an inter-network router connected to current wireless data network; generating a list of hand-off candidates for the wireless communications device; selecting a target base station hand-off candidate based upon a predetermined communications criteria; communicating the hand-off candidate to the wireless communications device; tuning to communications channel for facilitation of wireless communication with the hand-off candidate; and performing any necessary protocol conversion.

### Brief Description of the Drawings

A more complete understanding of the present invention may be obtained from consideration of the following description in conjunction with the drawings in which:
FIG. 1 is a block diagram showing the overall system architecture in an end-to end multiple network wireless data communications system;
FIG. 2 is a block diagram showing the internal structure of a protocol converter in accord with the present invention; and
FIG. 3 is a diagram showing process of protocol conversion in accord with the present invention.

### Detailed Description

Although the present invention is particularly well suited for use in a Cellular Digital Packet Data (CDPD) and an Automatic Train Control System (ATCS), and shall be described with respect to this application, the methods and apparatus disclosed here can be applied to other wireless data communications across a plurality of different wireless data networks.

Presently, a moving wireless communication device cannot communicate over more than one wireless data network. For example, a CDPD device is forced to only communicate over the CDPD wireless data network and is therefore isolated from other devices on a different network.

The present invention allows the moving wireless communication device the flexibility to choose from different wireless data networks. The present invention facilitates communication over a plurality of different wireless data networks through multiple capabilities including: determining the best quality wireless data network to access by comparing radio frequency (RF) signal strength measurements from different wireless data networks; performing necessary protocol conversion of data messages outbound from the wireless communications device, to a format usable by the air-interface protocol of the selected wireless data network; performing necessary protocol conversion of data messages in-bound to the wireless communications device, from the selected wireless data network, to a format usable by the end-processor of the moving wireless communication device; and performing actual routing of data messages to either the end-processor if in-bound messages are being received, or to the network radio frequency modem for radio transmission to the selected wireless data network if out-bound messages are being transmitted.

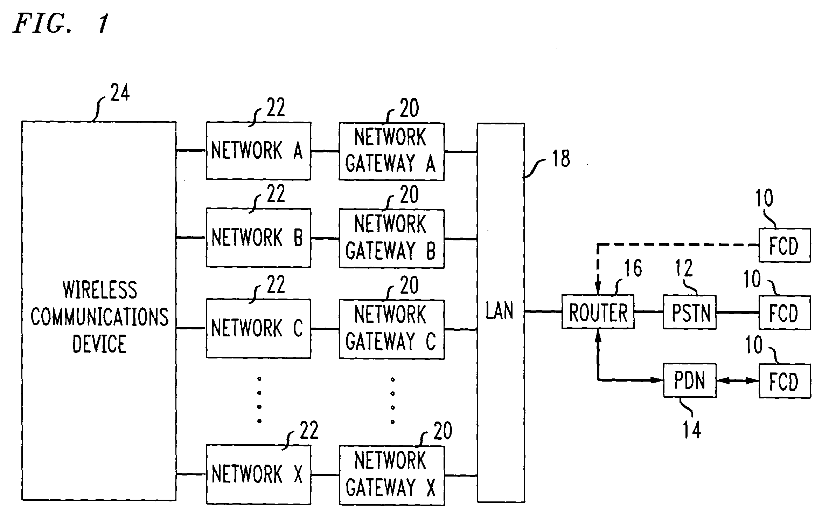

Referring to FIG. 1 there is shown the overall system architecture for facilitating wireless data communications across multiple networks. At the fixed network side, a fixed communications device (FCD) 10 is wired to a router 16. A plurality of wired connection options exist for connecting the fixed communications device with the router. FIG. 1 is a block diagram illustration of a Public Switched Telephone Network (PSTN) connection with an Integrated Services Digital Network (ISDN) interface. The wired connection between both the PSTN 12 and the fixed communications device 10 and the router 16 and PSTN 12 comprises an ISDN basic rate interface line (B-channel) whose operation and structure is well known to those skilled in the art and, therefore, the operation and structure thereof need not be described in detail. The router 16 can be connected to a fixed communications device 10 through a Packet Data Network (PDN) 14. A fixed communications device 10 comprises any communications device that is not mobile. At the wireless network side a wireless communications device 24 is capable of transmitting to several networks A, B, C to X 22 usable by the wireless communications device 24. The networks A, B, C, to X 22 are coupled to associated network gateways A, B, C to X 20 which convert the wireless transmitted information from device 24 to protocols used by a local area network 18 (LAN). The LAN 18 is interconnected to the wired network including the fixed communications device 10.

The router architecture 16 comprises two sub-routers, a master and a slave, which both perform the dual function of converting and routing data messages across multiple wireless data networks. The sub-routers are coupled to the fixed communications network and to the LAN 18. The network gateways A, B, C, to X 20 convert information from the protocols used by the fixed communication device 10, to protocols used by the wireless networks A, B, C, to X 20 which carry wireless transmissions to and from the wireless communications device.

Data messages in-bound from a wireless communications device across the multiple wireless data networks will be converted by the router 16 from the wireless data network protocol (as needed) to the wireless data network protocol usable by a fixed communications device 10. After conversion, the router will route the data message to the network address of the fixed communications device.

A data message out-bound from the fixed communications device across multiple wireless data networks will be converted (as needed) by the router from the network protocol used by the network containing the fixed communications device 10 to the wireless data network protocol usable by the destination wireless communications device 24. After conversion, the router will route the data message through a network gateway A, B, C, to X 20 to the network address of a destination wireless communications device 24.

Once it is determined which network A, B, C, to X 22 a data message came from, the routing table is updated. Any new message sent to the network is routed using the correct message format to the correct address by retrieving the receiver's location from the routing table. A mobile database is maintained for every active wireless communications device by storing a user profile for every active mobile user. Every message received by the router 16 is monitored to determine if it is the correct message type and any invalid message types are discarded. All messages received by the router are authenticated by monitoring a user identification (ID) and a source network address in the data message. Once received by the appropriate destination network control center, the data message will be routed through a destination network to a destination base station where the wireless communications device is currently being provided wireless access and/or registered. At the base station, the data message is transmitted by radio frequency (RF) transmission to a wireless communication device and received by the protocol converter of the wireless communications device.

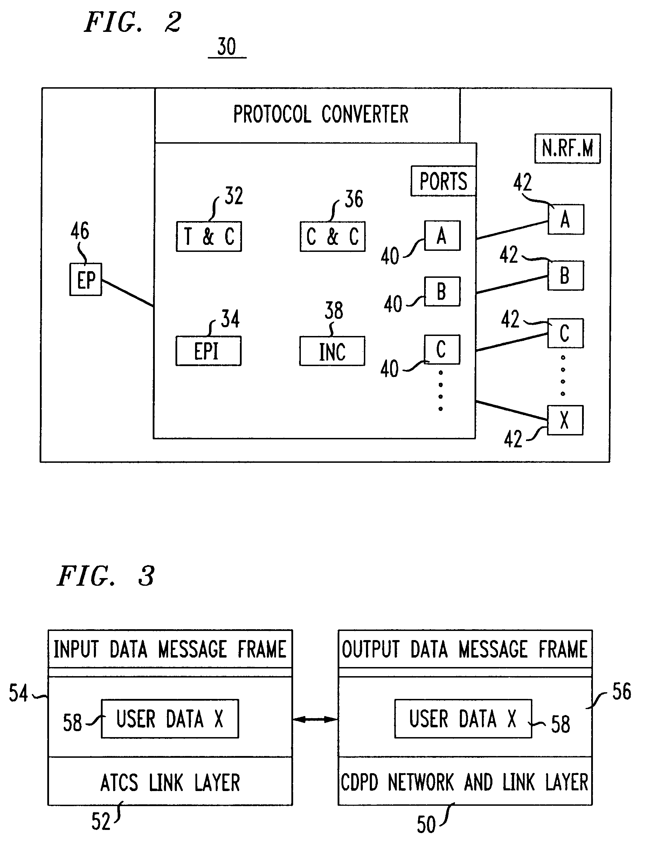

Referring to FIG. 2 there is shown the internal system architecture of the protocol converter 30 associated with a wireless device. The protocol converter 30 comprises a timing and control (T&C) 32, end processor interface (EPI) 34, configuration and control (C&C) 36, and an inter network control (INC) 38. The implementation of these functions would be understood by a person skilled in the art. Internal ports A, B, and C 40 provide interface connections to Network Radio Frequency Modems (NRFM) A, B, and C 42. The protocol converter 30 includes x number of ports for X number of network radio frequency modems 42. The end processor interface 34 provides a connection to the end processor (EP) 46 of the wireless communications device.

At the wireless communications device, a data message is received by one of the network radio frequency modems 42 the wireless communications device is currently using for wireless communications. The network radio frequency modems 42 are connected to the protocol converter 30 which performs functions similar to the router on network side. The choice of which wireless data network to choose for wireless communications is determined by the protocol converter.

The protocol converter 30 of FIG. 2 decision is a function of RF measurements received from a plurality of different wireless data networks in the current coverage area of the wireless communications device. The protocol converter receives the RF measurements through the plurality of different network radio frequency modems 42 that are connected to the protocol converter 30. The protocol converter can use a plurality of different methods to determine which wireless data network to use for wireless communications. A wireless communications device refers to any wireless communications device capable of transmitting and/or receiving data through radio transmission communications.

One exemplary method used by the protocol converter 30 is the comparison of the received RF measurement with a software controlled (predetermined) minimum RF strength (threshold) for viable wireless communications with that particular wireless data network and choose that particular wireless data network that yields the highest difference between the predetermined RF threshold and the RF measurement taken. Then the configuration and control (C&C) 36 will request wireless communications be performed over the selected wireless data network through the wired connection with the end processor 36 of the wireless communications device and the selected network radio frequency modems 42. Also, the protocol converter will inform the router at the network side by RF which wireless data network the protocol converter has chosen for wireless communications. Therefore, subsequent data messages in-bound to the wireless communications device will be routed to the correct wireless data network. After the request is made, the protocol converter performs the dual functions of converting data messages in-bound and out-bound to the requested wireless data network protocol and routing the converted data message.

A data message out-bound from the wireless communications device is converted by the protocol converter 30 from the network protocol usable by the end processor 46 of the wireless communications device to the requested network air-interface protocol to be used for wireless communications. The converted out-bound message is then routed by the protocol converter 30 to the requested one of a plurality of different wireless network radio frequency modems 42. Then the message is transmitted by RF to the network base station of requested wireless data network. A data message in-bound to the wireless communications device received from the requested wireless network radio frequency modems is converted by the protocol converter 30 from the requested wireless network air-interface protocol to the network protocol usable by the end-processor 46. The protocol converter 30 then routes the converted data message to the end processor of the wireless communications device.

An alternate method is used by the protocol converter for determining which wireless data network to use for wireless communications in which the protocol converter 30 compares the received RF measurement for a pre-set user-preferred wireless data network with the RF threshold for the user-preferred network contained in software. The user-preferred network will be requested unless RF measurement from the user-preferred network is not above RF threshold for the user-preferred network. In this case, the protocol converter 30 will select the particular wireless data network that yields the highest difference between the pre-set RF threshold and the RF measurement taken to perform wireless communications. Then the control and configuration 36 of the protocol converter 30 will request wireless communications be performed over the selected wireless data network through a wired connection with the end processor of the wireless communications device and the selected one of the plurality of network radio frequency modems 42. The protocol converter 30 will inform the router 16 at the network side by RF which wireless data network the protocol converter 30 has selected for wireless communications. Therefore, subsequent data messages in-bound to the wireless communications device will be routed to the correct wireless data network.

After the request is made, the protocol converter 30 will perform the dual function of converting in-bound and out-bound data messages to the requested wireless data network protocol and routing the converted data message. A message out-bound from the wireless communications device is converted by the protocol converter from the network protocol usable by the end processor 46 of the wireless communications device to the requested network air-interface protocol to be used for wireless communications. The converted out-bound message is then routed by the protocol converter to the requested wireless network radio frequency modems 42 where it is transmitted by RF to the network base station of the requested wireless data network. An in-bound message received from a requested one of a plurality of different wireless network radio frequency modems is converted by the protocol converter from the requested wireless network air-interface protocol to the network protocol usable by the end-processor of the wireless communications device. The protocol converter then routes the converted data message to end processor 46 of the wireless communications device.

During the course of a live call, a hand-off between wireless data networks will occur when viable wireless communications can no longer be maintained with the original system. The process by which the hand-off occurs from one radio frequency in one cell to another radio frequency in another cell across different wireless networks is performed quickly so callers should not notice. The protocol converter 30 periodically reports radio signal strength indicator measurements to the base station through an radio frequency modem for base station processing. The base station forwards the measurement data to the inter- network router. When the received radio signal strength indicator measurements by wireless communications device fall below a pre-determined threshold for that particular wireless data system (such as at inter-network border situation), the inter-network router responds to a hand-off request made by the wireless communications device. A list of potential hand-off candidates is generated from accessing the network routing table which maintains a current address location for the wireless communications device. Based upon pre-selected communications criteria, such as bandwidth, encryption, user services, data rate, etc., a prime target for hand-off is determined. The inter-network router sends a message to the wireless communications device through a specific network gateway instructing the mobile to hand-off to certain target wireless data system. The message will include a channel to tune to for the maintenance of the present, live call.

The protocol converter controller has selected the CDPD network after RF measurements taken from the CDPD network yielded the highest difference between the RF measurement taken and the pre-set RF threshold for viable CDPD wireless communications from differences calculated for each wireless data network in current coverage area. No user-preferred wireless data network has been set and therefore the network (CDPD) yielding highest difference is one chosen. The protocol converter has informed the router by RF which wireless data network the protocol converter has chosen for wireless communications. Therefore, subsequent data messages in-bound to the wireless communications device will be routed to the CDPD wireless data network. The operation and structure of the elements of a CDPD and Automatic Train Control System (ATCS) are well known to those skilled in the art and thus will not be described in great detail.

Referring now to FIG. 3 there is shown a block diagram illustrating the process of protocol conversion. For a fixed communications device initiated data transmission, the user data 58 will be extracted from the Automatic Train Control System (ATCS) frame 54 and put into a CDPD frame 56 having the necessary CDPD network information 50. The converted CDPD data message is then routed through a CDPD gateway to the home CDPD network control center for the wireless communications device. At a home Mobile Data Intermediate System (MD-IS), the CDPD data packet is routed to a Mobil Data Base Station (MDBS) where the destination wireless communications device is currently registered. When received at the MDBS, the CDPD data message is transmitted through RF to a CDPD radio frequency modem present in the wireless communications device. Once received by the CDPD radio frequency modem, the data packet is again converted to an Automatic Train Control System (ATCS) data packet usable by the end processor.. Then the data packet is routed by way of the wired connection to the end processor.

The process is reversed in the opposite direction for a mobile-originated wireless data transmission. In this case, a user-preferred CDPD wireless data network has been set. The CDPD network is chosen by the protocol converter for wireless communications after RF measurements taken from the CDPD network are above the pre-set RF threshold for viable wireless communications with the CDPD network. The protocol converter has informed the router through an RF transmission which wireless data network the protocol converter has been chosen for wireless communications (CDPD). Therefore, subsequent data messages in-bound to the wireless communications device will be routed to the CDPD wireless data network.

For a mobile-originated wireless data transmission, the end-processor routes the Automatic Train Control System (ATCS) data message to the protocol converter. Since protocol conversion is needed, the user data 58 is extracted by the protocol converter from the Automatic Train Control System (ATCS) frame 54 and put into a CDPD frame 56 that has necessary CDPD network information 50. The CDPD frame 56 is then routed by the protocol converter to the CDPD radio frequency modem for radio transmitted to the network Mobile Data Base Station (MDBS) that the wireless communications device is currently using for wireless access. The data packet is then routed to a network Mobile Data Intermediate System (MD-IS) and then to the router. At the router, the data packet is again monitored to ensure authenticated and correct data transmission (i.e., source and destination address, user ID, message type, time stamp, etc.). Error messages are reported to the router maintenance subsystem. Once authenticated, the user data 58 is extracted by the router from the CDPD frame 56 and placed into an Automatic Train Control System (ATCS) frame 54 with any necessary Automatic Train Control System (ATCS) network information 52.

When mobile-received radio signal strength indicator measurements drop below the pre-determined RF threshold (in inter-network border situation) for viable communications with the CDPD network during a live call, a hand-off request (including radio signal strength indicator measurements) will be sent to the inter-network router through the CDPD base station and CDPD network gateway. The inter-network router constructs a list of potential hand-off candidates for the mobile unit. A primary Automatic Train Control System (ATCS) target base station is selected based on various user criteria (data rate, bandwidth, encryption, user services, etc.) and the mobile unit is sent a message instructing where to tune to a specific channel for communication with the selected target Automatic Train Control System (ATCS) base station. Once the live call is handed off to the Automatic Train Control System (ATCS) network, the inter-network router routes out-bound messages to the mobile through the Automatic Train Control System (ATCS) network gateway and updates its routing table to the present destination address for the wireless communications device. Then, Automatic Train Control System (ATCS) data packets are received by the mobile through the Automatic Train Control System (ATCS) network radio frequency modem and routed directly to the end processor without the unnecessary protocol conversion. The process is reversed for packets transmitted by the mobile unit to a fixed communications device through the inter-network router. Packets generated by the mobile end processor are radio transmitted through the Automatic Train Control System (ATCS) radio frequency modem to the inter-network router through the Automatic Train Control System (ATCS) base station and Automatic Train Control System (ATCS) network gateway. The packets are then routed to the fixed communications device without the unnecessary protocol conversion.

Although the invention is described here by using a CDPD Automatic Train Control System (ATCS) internetwork handoff description, it is clear that it is not limited in scope to these two wireless data networks, but can be applied to a plurality of wireless data networks to enable wireless data communications across a plurality of wireless data network protocols irrespective of the wireless protocol usable by the fixed communications device or the end processor of the wireless communications device. Also, although the invention is described here by using a fixed-to-moving end description, it is clear that it is not limited in scope to wireless communications between a moving end user and a fixed communications device, but can also be applied to communications between two or more moving end users.

Numerous modifications and alternative embodiments of the invention will be apparent to those skilled in the art in view of the foregoing description. Accordingly, this description is to be construed as illustrative only and is for the purpose of teaching those skilled in the art the best mode of carrying out the invention. Details of the structure may be varied substantially without departing from the spirit of the invention and the exclusive use of all modifications which come within the scope of the appended claim is reserved.

## Claims

1. A method of inter-network hand-offs between a plurality of different wireless data networks, said method comprising the steps of:
receiving RF measurements from a plurality of wireless data network base stations;
comparing each of said received RF measurements to a predetermined minimum RF threshold;
CHARACTERIZED BY:
selecting one of said plurality of different wireless networks;
requesting a wireless communications device through a wired connection with a plurality of network radio frequency modems to communicate with said selected wireless network;
communicating said request through radio frequencies to an inter-network router connected to current wireless data network;
generating a list of hand-off candidates for said wireless communications device;
selecting a target base station hand-off candidate based upon a predetermined communications criteria;
communicating said hand-off candidate to said wireless communications device;
tuning to communications channel for facilitation of wireless communication with said hand-off candidate; and
performing any necessary protocol conversion.

2. The method as recited in claim 1 wherein the step of performing any necessary protocol conversion further comprises performing any necessary protocol conversion of out-bound messages sent from an originating wireless data network to said wireless communications device.

3. The method as recited in claim 1 wherein the step of performing any necessary protocol conversion further comprises performing any necessary protocol conversion of in-bound messages sent from said wireless communications device to said network.

4. The method as recited in claim 1 further comprising the step of communicating said RF measurements to a protocol converter.

5. The method as recited in claim 4 wherein a plurality of network radio frequency modems are used for communicating said RF measurements to said protocol converter.

6. The method as recited in claim 1 wherein said predetermined minimum RF threshold is selected for viable wireless communications with a particular wireless data network.

7. The method as recited in claim 1 wherein said list of hand-off candidates is generated as a function of location information from a routing table maintained for said wireless communications device.

8. The method as recited in claim 1 wherein the step of receiving RF measurements further comprises receiving RF measurements continually.

9. The method as recited in claim 1 wherein the step of selecting one of said plurality of different wireless networks is a function of comparing each of said received RF measurements to said predetermined minimum RF threshold.
